# EUROPEAN PATENT APPLICATION

(11) **EP 2 910 721 A1**
(43) Date of publication of application: **26.08.2015**
(21) Application number: 13846967.1
(22) Date of filing: 15.10.2013
(51) Int. Cl.: E05F 15/14, B60J 5/06, E05F 11/04

(54) **AUTOMATIC OPENING/CLOSING DEVICE FOR VEHICLE USE**

(30) Priority: 17.10.2012 JP 2012229963
(71) Applicant: Mitsuba Corporation, Kiryu-shi, Gunma 376-8555 (JP)
(72) Inventor: ATOMURA, Tatsuya, Kiryu-shi Gunma 376-8555 (JP); URANO, Yoshitaka, Kiryu-shi Gunma 376-8555 (JP)
(74) Representative: Vogel, Andreas
(86) International application number: PCT/JP2013/077912
(87) International publication number: WO 2014/061637

(57) **Abstract**

An object of the present invention is to provide an automatic opening and closing apparatus for vehicle, which is improved so that the amount of lengthwise movement of an opening and closing element in the longitudinal direction of the vehicle body is increased as much as possible. An automatic opening and closing apparatus for vehicle, which moves a slide door 13 to open and close an opening section 11, the automatic opening and closing apparatus comprises: a guide rail 16 located along the longitudinal direction of the vehicle body 14; a cable 26 connected to the slide door 13; and a rear-side pulley unit 29 located on the vehicle body 14, wherein the guide rail 16 and the rear-side pulley unit 29 are located at positions different from each other in a width direction of the vehicle body 14, the rear end of the guide rail 16 and the rear-side pulley unit are located at the same position in the longitudinal direction of the vehicle body 14, and the automatic opening and closing apparatus further comprises: an auxiliary member which keeps the cable 26, which is routed between the slide door 13 and the rear pulley unit 29, in a predetermined state.

## Description

### TECHNICAL FIELD

The present invention relates to an automatic opening and closing apparatus for vehicle, which moves an opening and closing element to open and close an opening section.

### BACKGROUND ART

Conventionally, an automatic opening and closing apparatus for vehicle, which moves an opening and closing element to open and close an opening section, has been known and an example of such an apparatus is described in Patent document 1. A vehicle described in Patent document 1 has a guide rail which extends along the longitudinal direction of a vehicle body thereof. In this vehicle, an opening and closing element is fitted with a roller assy, which moves along the guide rail to move the opening and closing element in the longitudinal direction of the vehicle body, and to open and close an opening section. A front-side pulley unit is located near the front end of the guide rail on the vehicle body, while a rear-side pulley unit is located near the rear end of the guide rail on the vehicle body.

The vehicle body is provided with a drive unit which has: a power source (electric motor); and a drum which is rotated clockwise and counterclockwise by power from the power source. The drum carries a first cable and a second cable which are wound around the drum in directions opposite to each other. The first cable is wound around the rear-side pulley, and has an end connected to the roller assy. The second cable is wound around the front-side pulley, and has an end connected to the roller assy.

In the automatic opening and closing apparatus for vehicle described in Patent document 1, when the opening section is closed with the opening and closing element, the power source drives the first cable to wind it around the drum while driving the second cable to sent it out from the drum. As a result, the opening and closing element moves toward the rear of the vehicle body to open the opening section. In contrast, when the opening section is opened, the power source drives the second cable to wind it around the drum while driving the first cable to sent it out from the drum. As a result, the opening and closing element moves toward the front of the vehicle body to close the opening section.

### PRIOR ART DOCUMENTS

### PATENT DOCUMENTS

Patent Document 1: Japanese Patent Application Laid-Open Publication No. 2006-169822

### DISCLOSURE OF THE INVENTION

### PROBLEMS TO BE SOLVED BY THE INVENTION

In the automatic opening and closing apparatus for vehicle described in Patent document 1, since the opening and closing element moves in the longitudinal direction of the vehicle body, the actual extent of opening of the opening section in the longitudinal direction of the vehicle body depends on the extent of movement of the opening and closing element. In the automatic opening and closing apparatus for vehicle described in Patent document 1, however, since the rear-side pulley unit is located behind the rear end of the guide rail in the longitudinal direction of the vehicle body, this configuration tends to restrict the length of the guide rail in the longitudinal direction of the vehicle body, and makes it difficult to increase the amount of lengthwise movement of the opening and closing element in the longitudinal direction of the vehicle body as much as possible.

An object of the present invention is to provide an automatic opening and closing apparatus for vehicle which is improved so that the amount of lengthwise movement of an opening and closing element in the longitudinal direction of the vehicle body is increased as much as possible.

### MEANS FOR SOLVING THE PROBLEMS

According to one aspect of the present invention, an automatic opening and closing apparatus for vehicle, which moves an opening and closing element in a longitudinal direction of a vehicle body to open and close an opening section, the automatic opening and closing apparatus comprising: a guide rail located along the longitudinal direction of the vehicle body, and configured to guide movement of the opening and closing element; a first cable connected to the opening and closing element, the first cable receiving transmitted power for moving the opening and closing element; and a first pulley unit located on the vehicle body and wound with the first cable, wherein the guide rail and the first pulley unit are located at positions different from each other in a width direction of the vehicle body, wherein part of the guide rail and the first pulley unit are located at the same position in the longitudinal direction of the vehicle body, and wherein the automatic opening and closing apparatus further comprises: an auxiliary member which keeps a part of the first cable which is routed between a part connected to the opening and closing element and the first pulley unit in a predetermined state of movement.

According to the present invention, a rear end of the guide rail in a longitudinal direction of the vehicle body may be provided with a cutout section which is formed by cutting out the guide rail along the longitudinal direction of the vehicle body, and through which a part of the first cable, which is routed between the opening and closing element and the first pulley unit, passes.

According to the present invention, the auxiliary member may be attached to a rear end of the guide rail in a longitudinal direction of the vehicle body.

According to the present invention, the automatic opening and closing apparatus for vehicle may comprise: a second cable connected to the opening and closing element, the second cable receiving transmitted power for moving the opening and closing element; a second pulley unit located further frontward than the first pulley unit in a longitudinal direction of the vehicle body and wound with the second cable; and a drum located on the vehicle body and rotated clockwise and counterclockwise by an electric motor which generates power to be transmitted to the first cable and the second cable, wherein the first cable is wound around the drum and the second cable is wound around the drum in a direction of winding reverse to a direction of winding of the first cable.

### EFFECTS OF THE INVENTION

According to the present invention (claim 1), since the guide rail and the first pulley unit are located at positions different from each other in a width direction of the vehicle body, the rear end side of the guide rail can be located as further rearward as possible on the vehicle body. As a result, the amount of lengthwise movement of an opening and closing element in the longitudinal direction of the vehicle body can be increased as much as possible and therefore the length of an opening section in the longitudinal direction of the vehicle body can be increased as much as possible. Furthermore, since the rear end side of the guide rail and the first pulley unit are located at the same position in the longitudinal direction of the vehicle body, in the longitudinal direction of the vehicle body, it is possible to suppress the total length of an area given by combination of the area occupied by the rear end side of the guide rail and the area occupied by the first pulley unit. In addition, the first cable can be kept in a predetermined state between the opening and closing element and the first pulley unit, using an auxiliary member.

According to the present invention (claim 2), in addition to the above-mentioned effects of the present invention, it is possible to prevent the guide rail and the first cable from coming into contact with each other. Therefore, an overlapping area where the area occupied by the rear end side of the guide rail and the area occupied by the first pulley unit overlap at the same position in the longitudinal direction of the vehicle body can be made longer as much as possible.

According to the present invention (claim 3), in addition to the above-mentioned effects of the present invention, a third aspect of the present invention offers another effect that no guide member needs to be located between the first pulley unit and the guide rail in the width direction of the vehicle body.

According to the present invention (claim 4), in addition to the above-mentioned effects of the present invention, the opening and closing element is moved toward the rear of the vehicle body to open the opening section, the amount of lengthwise movement of the opening and closing element can be increased as much as possible.

### BRIEF DESCRIPTION OF THE DRAWINGS

FIG. 1 is a side view showing a vehicle having an automatic opening and closing apparatus for vehicle according to the present invention;
FIG. 2 is a plan view schematically showing a vehicle having an automatic opening and closing apparatus for vehicle according to the present invention;
FIG. 3 is a sectional view showing the first specific example of the automatic opening and closing apparatus for vehicle according to the present invention;
FIG. 4 is a rear view showing the first specific example of the automatic opening and closing apparatus for vehicle according to the present invention;
FIG. 5 is a plan view showing the second specific example of the automatic opening and closing apparatus for vehicle according to the present invention;
FIG. 6 is a side view showing the second specific example of the automatic opening and closing apparatus for vehicle according to the present invention;
FIG. 7 is a plan view showing the third specific example of the automatic opening and closing apparatus for vehicle according to the present invention; and
FIG. 8 is a rear view showing the third specific example of the automatic opening and closing apparatus for vehicle according to the present invention.

### DESCRIPTION OF THE PREFERRED EMBODIMENTS

An automatic opening and closing apparatus for vehicle of the present invention is a mechanism which is usually referred to as "powered slide door". According to this apparatus, no human power is applied to an opening and closing element, but power from a power source is transmitted to the opening and closing element to cause it to move, thereby opening and closing an opening section of a vehicle body. Hereinafter, one embodiment of the present invention will be described in detail with reference to the drawings.

### (First Specific Example)

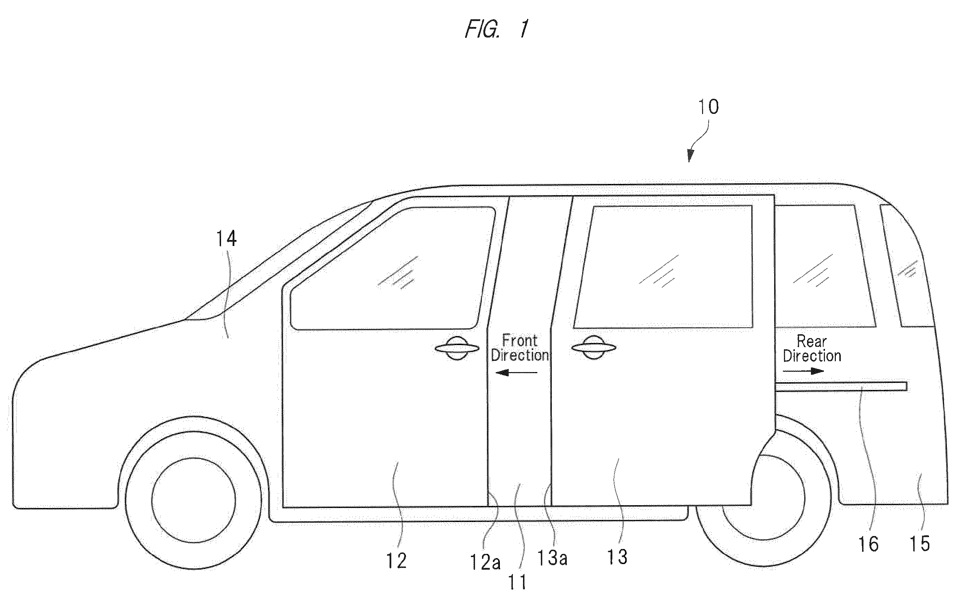

A vehicle 10 shown in FIG. 1 is a minivan. On a side of a vehicle body 14 forming part of the vehicle 10, an opening section 11 is formed, which is an opening formed between a front door 12 and a slide door 13 when the slide door 13 is slid rearward. The front door 12 is located in front of the slide door 13 in the longitudinal direction of the vehicle body 14. The longitudinal direction of the vehicle body 14 is the same as the direction in which the vehicle 10 travels forward or rearward. The slide door 13 is capable of reciprocating in the longitudinal direction of the vehicle body 14. In other words, the slide door 13 is capable of reciprocating horizontally. The opening section 11 is created between the rear end 12a of the front door 12 and the front end 13a of the slide door 13.

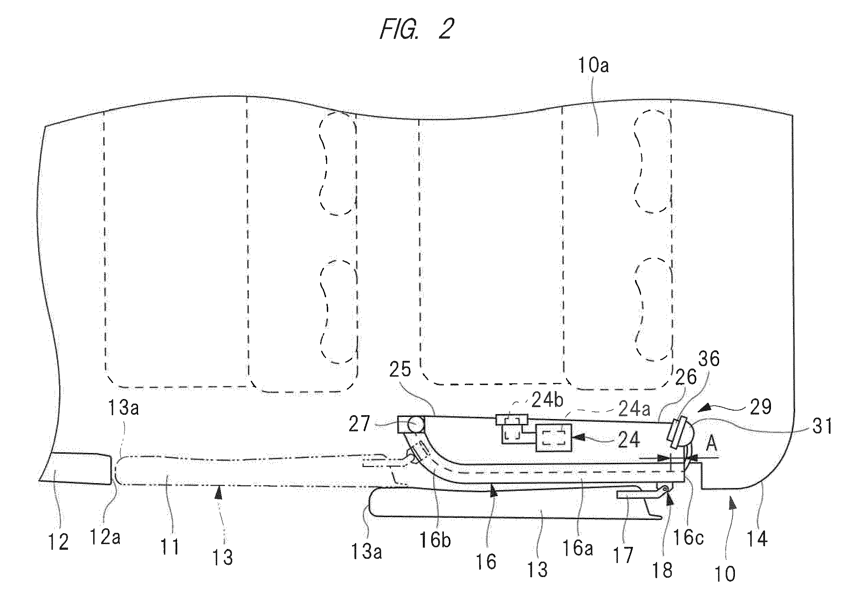

A configuration for moving the slide door 13 will then be described. To an exterior panel 15 forming part of the vehicle body 14, a guide rail 16 is attached to extend in the longitudinal direction of the vehicle body 14. The guide rail 16 is constructed by press working a metal plate material. The guide rail 16 is located horizontally, and has a linear portion 16a and a curved portion 16b, as shown in FIG. 2. The linear portion 16a is extended linearly on a horizontal plane, and the curved portion 16b is connected to the front end of the linear portion 16a in the longitudinal direction of the vehicle body 14. On the horizontal plane, the curved portion 16b is curved in such a way that the curved portion 16b approaches a compartment 10a of the vehicle 10 as the curved portion 16b extends further toward the front of the vehicle body 14.

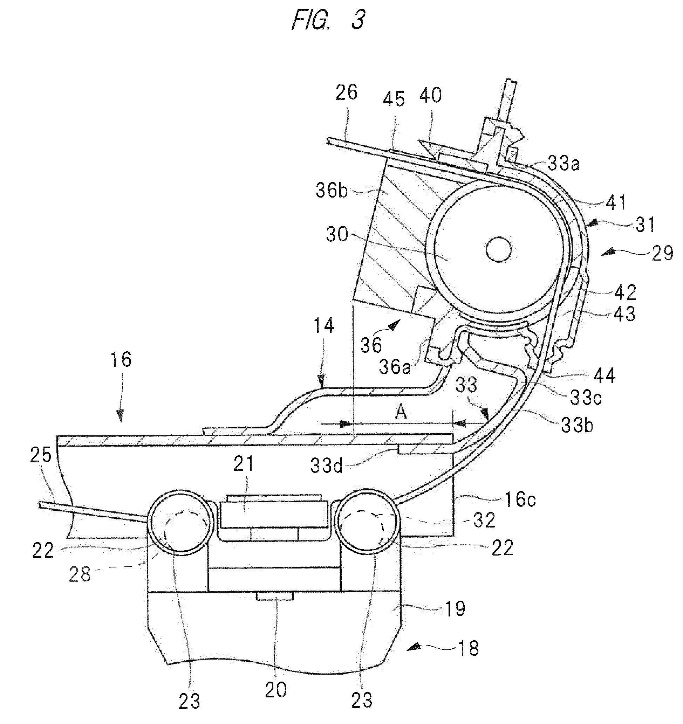

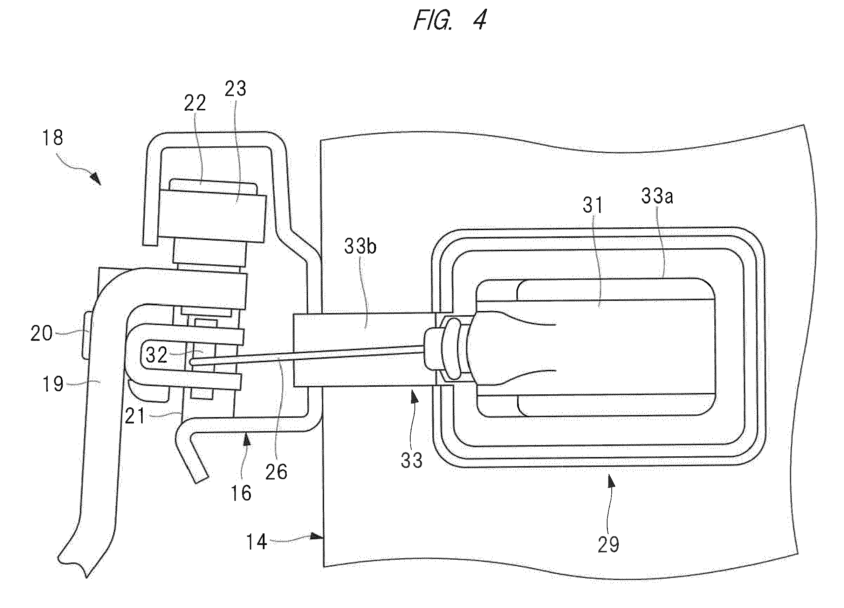

A roller assy 18 is attached to the rear end of the slide door 13 in the longitudinal direction of the vehicle body 14 via a support arm 17. As shown in FIGS. 3 and 4, the roller assy 18 has a bracket 19, which is fitted with a roller 21 capable of rotating around a support shaft 20. The axis of the support shaft 20 is almost horizontal and extends along the width direction of the vehicle body 14. The width direction of the vehicle body 14 is the direction almost perpendicular to the longitudinal direction of the vehicle body 14 on a horizontal plane. The bracket 19 is also fitted with a roller 23 capable of rotating around a support shaft 22. The axis of the support shaft 22 is almost perpendicular to the axis of the support shaft 20. The slide door 13 can be moved in the longitudinal direction of the vehicle body 14 as a result of rolling of the rollers 21 and 23 along the guide rail 16.

The vehicle body 14 has a drive unit 24. The drive unit 24 is located closer to the compartment 10a than the guide rail 16 in the width direction of the vehicle body 14 and is located between the front end and the rear end of the guide rail 16 in the longitudinal direction of the vehicle body 14. The drive unit 24 is a mechanism which generates power by which the slide door 13 is moved, and has an electric motor 24a capable of rotating clockwise and counterclockwise and a drum 24b rotated by power from the electric motor 24a. The drum 24b carries two cables 25 and 26 wound thereon in directions opposite to each other. The cables 25 and 26 are wire rods or wires formed by twisting together multiple metal thin wires.

The vehicle 10 includes an electronic controller (not shown) which controls the stoppage, direction of movement, etc., of the slide door 13. A signal from an operating switch (not shown) located in the compartment 10a of the vehicle 10 is input to the electronic controller (not shown). The operating switch is a mechanism on which a user selects the stoppage, direction of movement, etc., of the slide door 13. When the operating switch is operated to provide a condition for moving the slide door 13 toward the front or rear of the vehicle 10, the electric motor 24a rotates. When a condition for stopping the slide door 13 is provided, the electric motor 24a is stopped from rotating. When the electric motor 24a rotates, one cable is wound around the drum 24b as the other cable is set out from the drum 24b.

A front-side pulley unit 27 is located near the front end of the guide rail 16 of the vehicle body 14. The front-side pulley unit 27 has a front-side pulley (not shown) and a casing (not shown) so supporting the front-side pulley as to allow it to rotate. One cable 25 is wound around the front-side pulley. Apiece (pin) 28 is fixed to the end of the cable 25 which is opposite to the drum 24b, and is so held that the piece 28 can adjust the direction of the cable relative to the bracket 19.

A rear-side pulley unit 29 is located near the rear end of the guide rail 16 of the vehicle body 14. The rear-side pulley unit 29 is located closer to the compartment 10a than the guide rail 16 in the width direction of the vehicle body 14. The rear-side pulley unit 29 and the guide rail 16 are located at positions different from each other in the width direction of the vehicle body 14. In addition, in the longitudinal direction of the vehicle body 14, part of the guide rail 16 and the rear-side pulley unit 29 are located at the same position. Specifically, in the longitudinal direction of the vehicle body 14, an area occupied by the guide rail 16 and an area occupied by the rear-side pulley unit 29 overlap to form an overlapping area "A". In an assumed case where the rear-side pulley unit 29 and the guide rail 16 are translated toward each other in the width direction of the vehicle body 14, the area occupied by the rear-side pulley unit 29 and the area occupied by the guide rail 16 overlap in an area equal in length to the overlapping area "A". An occupied area means an area or space in the longitudinal direction or width direction of the vehicle body 14.

As shown in FIG. 3, the rear-side pulley unit 29 has a rear-side pulley 30, a resin case 36 supporting the rear-side pulley 30 so as to allow it to rotate, and a case cover 31 made of a flexible material covering the case 36. The case 36 is fixed to the vehicle body 14. Methods of fixing the case 36 to the vehicle body 14 include a method of fixing the case 36 directly to the vehicle body 14 using a bolt and a nut, a method of fixing the case 36 indirectly to the vehicle body 14 via a bracket (not shown), and a method of fitting the case 36 into a fitting hole (not shown) formed on the vehicle body 14 to fix the case 36.

The case 36 is composed of a case half-body 36a and a case half-body 36b. The rear-side pulley 30 is supported rotatably by the case half-body 36a. The case half-body 36a is provided with an engagement piece 40, which is engaged with the case half-body 36b to fix the case half-body 36a and the case half-body 36b together to form the case 36. In the longitudinal direction of the vehicle body 14, the overlapping area "A" includes an area extending from the rear end of the case half-body 36b to the front end of the guide rail 16. In the case 36, a guide passage 41 is formed, which is curved along the outer peripheral shape of the rear-side pulley 30. The case half-body 36a has an opening section 42, with which the guide passage 41 is connected.

The case cover 31 has a guide passage 43, which is extended toward the guide rail 16 in the width direction of the vehicle body 14. The guide passage 43 is connected with the guide passage 41. The case cover 31 also has an opening section 44, which is connected with the guide passage 43. The opening section 44 is located further rearward than the rear end 16c of the guide rail 16 in the longitudinal direction of the vehicle body 14. The case half-body 36b has a guide passage 45, which is connected with the guide passage 41.

The cable 26 guided by the guide rail 16 is so routed that the cable 26 passes through the opening section 44, the guide passage 43, the guide passage 41, and the guide passage 45. The cable 26 coming out of the guide passage 45 is wound around the drum 24b. The cable 26 is wound around the rear-side pulley 30 in the guide passage 41 and is consequently changed in direction. A piece (pin) 32 is attached to the end of the cable 26 which is opposite to the drum 24b, and is so held that the piece 32 can adjust the direction of the cable 26 relative to the bracket 19.

The rear-side pulley unit 29 is fitted with a guide member 33 which assists in routing the cable 26. A fitting hole 33a is formed on the guide member 33, and the rear-side pulley unit 29 is fitted in the fitting hole 33a. The guide member 33 has a guide section 33b curved on a plane. The guide member 33b is an element which assists in keeping the part of the cable 26 which is between the piece 32 and the opening section 44 in a proper state. The guide section 33b prevents the cable 26 from coming in contact with the rear end 16c of the guide rail 16. The guide section 33b is an element which keeps the part of the cable 26 which is routed between the piece 32 and the opening section 44 in a predetermined state of movement.

The state of movement of the cable 26 is determined by various factors including the radius of curvature of the curved cable 26, the bending angle of the cable 26 bent on a given plane, the lengthwise direction of the cable 26, and an angle of contact between the opening section 44 and the cable 26. The angle of contact refers to an acute angle made between the axis of the opening section 44 (not shown) and the longitudinal axis of the cable 26 (not shown). The smaller the angle of contact is, the smaller the frictional resistance of a contact part between the cable 26 and the case cover 31 is. The larger the radius of curvature and the bending angle of the curved cable 26 are, the smaller a stress concentrated on the cable 26 is. Therefore, the predetermined state of movement means a state in which a reduction in the durability of the cable 26 due to stress concentration on the cable 26 is prevented when the slide door 13 is opened and closed repeatedly. The predetermined state of movement is determined by experiments, simulations, etc., in which the wear, seizing, damage, etc., of the cable 26 are taken into consideration.

Therefore, it is possible to keep the above part of the cable 26 in the predetermined state of movement prevents the cable 26 from being bent at an angle smaller than a given angle between the piece 32 and the opening section 31c. The given angle is determined by experiments, simulations, etc. in advance, as such a reference angle that if the cable 26 bent at an angle smaller than this reference angle is moved lengthwise repeatedly, the durability of the cable 26 drops. When the durability of the cable 26 is maintained, the radius of curvature of the guide section 33b is not always need to be equal to or larger than the radius of curvature of the rear-side pulley 30.

The guide section 33b playing the above role is formed by bending a plate material made of metal, resin, etc., in the thickness direction. Specifically, the guide section 33b is curved into an almost arcuate shape on a horizontal plane. On the horizontal plane, one end 33c of the guide section 33b is located near the opening section 31c while the other end 33d of the same is located near the rear end 16c of the guide rail 16.

The movement of the slide door 13 will then be described. When the slide door 13 is stopped at its front end position where the slide door 13 is at the front end of its forward movement stroke in the longitudinal direction of the vehicle body 14, the opening section 11 is closed with the slide door 13. When the operating switch is operated to open the opening section 11 closed with the slide door 13, the electric motor 24a rotates in a given direction. The rotation of the electric motor 24a causes the drum 24b to put the cable 26 around the drum 24b. As a result, the torque of the electric motor 24a is converted into the tractive force of the cable 26. When the cable 26 exerts its tractive force, the slide door 13 moves toward the rear of the vehicle 10 along the guide rail 16 as the drum 24b sends out the other cable 25. Afterward, at the point that the slide door 13 moves to its rear end position in the longitudinal direction of the vehicle body 14, the electric motor 24a stops rotating. In this manner, the opening section 11 is opened.

When the operating switch is operated to close the opening section 11 in its opened state, the electric motor 24a rotates in the direction opposite to the above given direction. The rotation of the electric motor 24a causes the drum 24b to put the cable 25 around the drum 24b. As a result, the torque of the electric motor 24a is converted into the tractive force of the cable 25. When the cable 25 exerts its tractive force, the slide door 13 moves toward the front of the vehicle 10 along the guide rail 16 as the drum 24b sends out the other cable 26. Afterward, at the point that the slide door 13 moves to its front end position in the longitudinal direction of the vehicle body 14, the electric motor 24a stops rotating. In this manner, the opening section 11 is closed.

When the cable 26 is moved in the lengthwise direction, the cable 26 comes in sliding contact with the guide section 33b. At this time, the part of the cable 26 which is routed between the piece 32 and the opening section 31c is kept in the predetermined state by the guide section 33b. This prevents a case where the cable 26 comes in contact with the rear end 16c of the guide rail 16 and the durability of the cable 26 drops because of the contact.

The location where the rear-side pulley unit 29 is attached to the vehicle body 14, i.e., the area occupied by the rear-side pulley unit 29 is closer to the compartment 10a than the area occupied by placement of the guide rail 16 in the width direction of the vehicle body 14. This means that the rear-side pulley unit 29 overhangs toward the rear of the guide rail 16 to little extent. For this reason, even if the length of the guide rail 16 in the longitudinal direction of the vehicle body 14 is increased as much as possible, the rear-side pulley unit 29 does not constitutes an obstacle to the guide rail 16. In other words, the rear end 16c of the guide rail 16 can be located as further rearward as possible in the longitudinal direction of the vehicle body 14. As a result, the amount of movement of the slide door 13 (door stroke) toward the rear of the vehicle body 14 can be increased to locate the rear end of the door stroke as much closer to the rear end of the vehicle 10 as possible. Hence the opening length (opening width) of the opening section 11 in the longitudinal direction of the vehicle body 14 can be increased as much as possible to widen the opening section 11. In the longitudinal direction of the vehicle body 14, the overlapping area "A" is formed, where the area occupied by part of the guide rail 16 and the area occupied by the rear-side pulley unit 29 overlap. As a result, in the longitudinal direction of the vehicle body 14, the rear end of the guide rail 16 can be located as further rearward as possible in the area equivalent in length to the overlapping area "A". Even in the case of a small-sized vehicle whose vehicle body 14 is relatively short in length, therefore, the guide rail 16 can be located closer to the rear of the vehicle 10 to widen the opening section 11 and the automatic opening and closing apparatus can be located in the limited space of the vehicle body 14.

The guide member 33 plays the role of preventing the part of the cable 26 which is between the piece 32 and the opening section 31c from being bent at an angle smaller than the given angle. This causes the cable 26 to move smoothly lengthwise and prevents a reduction in the durability of the cable 26.

The guide rail 16 and the rear-side pulley unit 29 may be located on the same plane or on respective planes different from each other. Such design variations may be adopted depending on the shapes of parts incorporated in the vehicle body 14, the shape of the vehicle body 14, etc. If the guide rail 16 and the rear-side pulley unit 29 are located on respective planes different from each other, the position of the piece 32 and the position of the opening section 31c are different from each other in the height direction of the vehicle 10. In such a case, by increasing the size of the guide member 33 in the height direction of the vehicle 10, the cable 26 may be move at a given angle against the horizontal direction.

### (Second Specific Example)

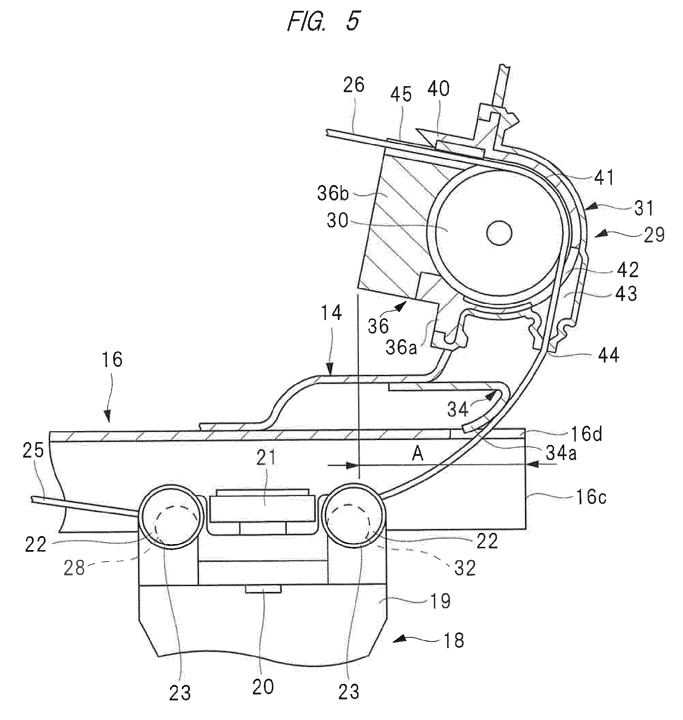

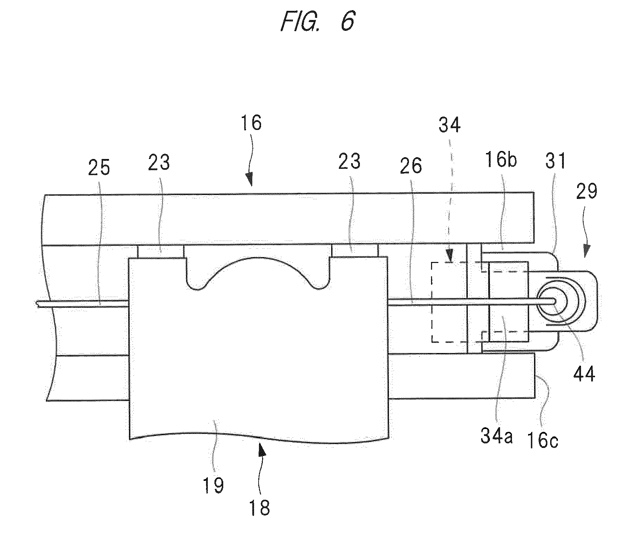

Then, a second specific example of this embodiment will be described with reference to FIGS. 5 and 6. The second specific example applies to FIGS. 1 and 2. In FIGS. 5 and 6, the same constituent elements as described in FIGS. 1 to 4 are denoted by the same reference numerals used in FIGS. 1 to 4, and are therefore omitted in further description. In the second specific example, an area occupied by the rear-side pulley unit 29 is closer to that of the compartment 10a than that of the guide rail 16 in the width direction of the vehicle body 14. The second specific example, therefore, offers the same effect as offered by the first specific example.

In the longitudinal direction of the vehicle body 14, the area occupied by the rear-side pulley unit 29 and the area occupied by the guide rail 16 partially overlap in the location where the overlapping area "A" is formed. A cutout section 16d extending along the longitudinal direction of the vehicle body 14 is formed near the rear end 16c of the guide rail 16. The cable 26 is so routed that it passes through the cutout section 16d. The vehicle body 14 is fitted with a guide member 34, which is an element that assists in keeping the cable 26 in a proper state between the piece 32 and the opening section 44. On a part of the guide member 34 with which the cable 26 comes in contact, a guide section 34a is formed into an arcuate shape on a horizontal plane. The front end of the guide section 34a is placed in the cutout section 16d. The guide section 34a is placed in the overlapping area "A" where the rear-side pulley unit 29 and the guide rail 16 overlap.

In the second specific example, the electric motor 24a is rotated so as to cause the cables 25 and 26 to move in their lengthwise direction, as a result, the slide door 13 moves in the longitudinal direction of the vehicle body 14 to open and close the opening section 11. When the cable 26 moves in the lengthwise direction, the cable 26 comes in sliding contact with the guide member 34. The cable 26 is kept in a proper state by the assisting action of the guide section 34a of the guide member 34. In the second specific example, the area occupied by the rear-side pulley unit 29 and the area occupied by the guide rail 16 partially overlap in the longitudinal direction of the vehicle body 14 to form the overlapping area "A". This offers the same effect as offered by the first specific example. The guide section 34a of the guide member 34 plays the role of keeping the part of the cable 26 which is between the piece 32 and the opening section 44 in the predetermined state of movement. This, therefore, offers the same effect as offered by the first specific example.

In the second specific example, the cutout section 16d is formed on the guide rail 16 to provide a configuration in which the cable 26 passes through the cutout section 16d. As a result, even if the length of the overlapping area "A" is increased as much as possible according to the length of the cutout section 16d in the longitudinal direction of the vehicle body 14, the cable 26 is prevented from coming in contact with the guide rail 16. In other words, the rear end 16c of the guide rail 16 can be located as further rearward as possible according to the length of the cutout section 16d. According to the second specific example, therefore, the range of movement of the slide door 13 in the longitudinal direction of the vehicle body 14 can be increased further in length. In addition, since the guide rail 16 is provided with the cutout section 16d, it is possible to prevent the cable 26 from coming in contact with the edge of the plate material making up the guide rail 16.

If the opening section 44 is located further frontward than the front end of the cutout section 16d and is directed toward the rear of the vehicle body 14 and the arcuate length of the guide section 34a of the guide member 34 is increased as much as possible (which is a structure not shown), the cable 26 is prevented from coming in contact with the guide rail 16 and from being bended at an angle smaller than the given angle. In the second specific example, the guide rail 16 and the rear-side pulley unit 29 may be placed on the same plane or on different planes. In the second specific example, the same constituent elements as included in the first specific example offer the same effects as offered by the first specific example.

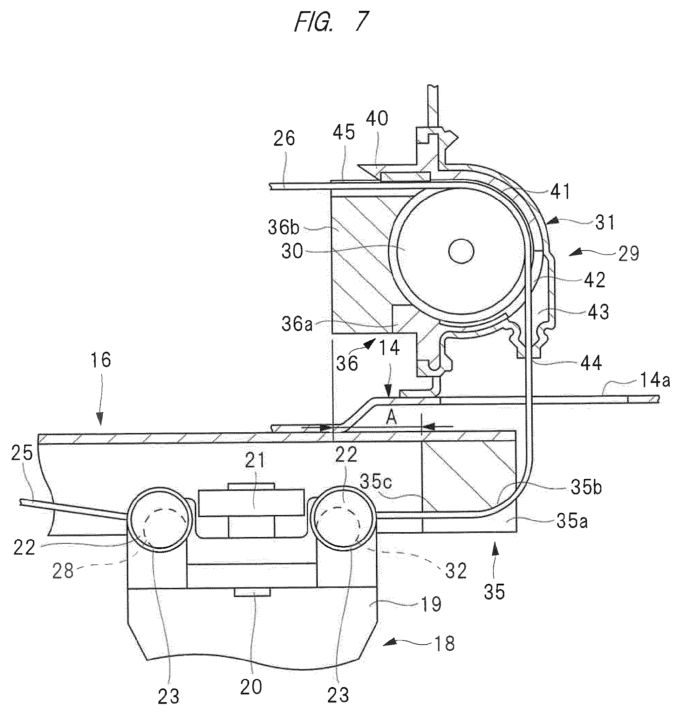

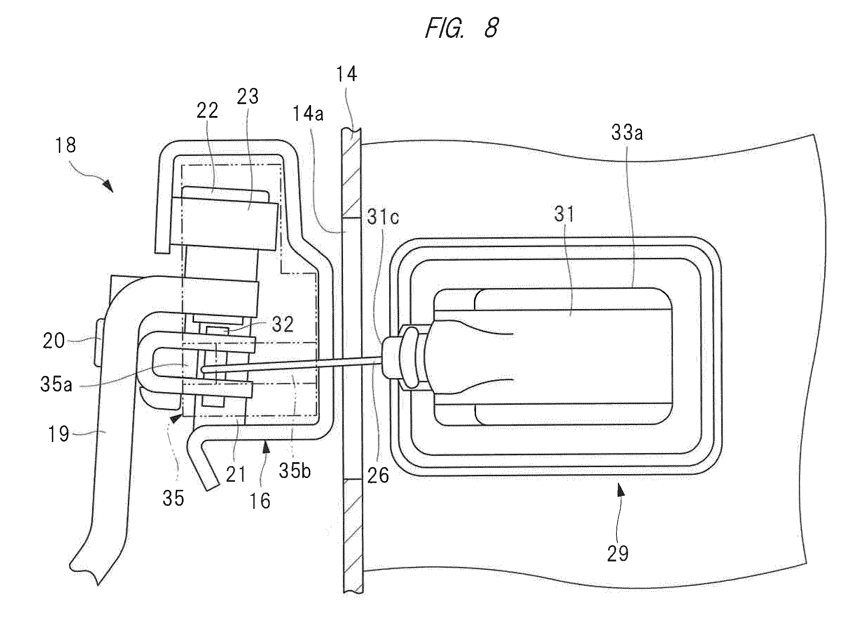

Then, the third specific example of this embodiment will be described with reference to FIGS. 7 and 8. The third specific example also applies to FIGS. 1 and 2. In FIGS. 7 and 8, the same constituent elements as described in FIGS. 1 to 4 are denoted by the same reference numerals used in FIGS. 1 to 4, and are therefore omitted in further description. In the third specific example, an area occupied by the rear-side pulley unit 29 is closer to that of the compartment 10a than that of the guide rail 16 in the width direction of the vehicle body 14. The third specific example, therefore, offers the same effect as offered by the first specific example.

In the third specific example, a guide member 35 is attached to the guide rail 16. The guide member 35 is a block molded integrally out of metal material or resin material, and has a slit 35a extending in the longitudinal direction of the vehicle body 14. The cable 26 is allowed to pass through the slit 35a, whose bottom 35b is formed into an arcuate shape. The rear end of the guide member 35 is at the same position as the position of the opening section 44 in the longitudinal direction of the vehicle body 14. The vehicle body 14 has an opening section 14a, through which the cable 26 passes to connect to the piece 32.

In the third specific example, the electric motor 24a is rotated so as to cause the cables 25 and 26 to move in their lengthwise direction, as a result, the slide door 13 moves in the longitudinal direction of the vehicle body 14 to open and close the opening section 11. When the cable 26 moves in the lengthwise direction, the cable 26 comes in sliding contact with the guide member 35. At this time, the part of the cable 26, which is between the piece 32 and the opening section 44 is kept in the predetermined state of movement by the bottom 35b of the guide member 35. This, therefore, offers the same effect as offered by the first specific example.

In the third specific example, the area of placement of the rear-side pulley unit 29 partially overlaps the area of placement of the guide rail 16 in the longitudinal direction of the vehicle body 14 to form the overlapping area "A". In the third specific example, the overlapping area "A" is determined with reference to the front end 35c of the guide member 35. This is because that the guide member 35 is fixed to the guide rail 16 and that if the bracket 19 comes in contact with the front end 35c of the guide member 35 in the longitudinal direction of the vehicle body 14, the roller assy 18 cannot move further rearward from the point of contact.

In the third specific example, the overlapping area "A" is formed, where the area of placement of the rear-side pulley unit 29 and the area of placement of the guide rail 16 partially overlap in the longitudinal direction of the vehicle body 14. This offers the same effect as offered by the first specific example. The bottom 35b of the guide member 35 plays a role of preventing the part of the cable 26 that is between the piece 32 and the guide passage 31b from being bended at an angle smaller than the given angle. This, therefore, offers the same effect as offered by the first specific example. In the third specific example, the guide rail 16 and the rear-side pulley unit 29 may be placed on the same plane or on different planes. In the third specific example, the same constituent elements as included in the first specific example offer the same effects as offered by the first specific example.

Then, correspondence relation between constituent elements of the present invention and constituent elements described in the above specific examples will be described. The slide door 13 is equivalent to the opening and closing element of the present invention, the cable 26 is equivalent to a first cable of the present invention, the cable 25 is equivalent to a second cable of the present invention, the rear-side pulley unit 29 is equivalent to a first pulley unit of the present invention, the front-side pulley unit 27 is equivalent to a second pulley unit of the present invention, and the guide members 33, 34, and 35 are equivalent to auxiliary members of the present invention. The piece 32 is equivalent to "a part connected to the opening and closing element" of the present invention.

The present invention is not limited to the above embodiment but may obviously be modified into various forms on the condition that the modification does not deviate from the substance of the invention. For example, the guide member is fixed to the rear-side pulley unit in the first specific example. However, the guide member may be fixed to the vehicle body panel or to the guide rail. In the second specific example, the guide member may be fixed not to the vehicle body but to the case cover. In each specific example, the radius of curvature of the arcuate part of the guide member which guides the cable should preferably be equal to or larger than the radius of curvature of the pulleys.

The front-side and rear-side pulley units are fitted directly to the vehicle body in the above configuration. The front-side and rear-side pulley units, however, may be fitted to the vehicle body via a dedicated mounting body, bracket, etc. The guide member made of the plate material that guides the cable may be formed into a cylindrical shape so that the cable is passed through a hole formed on the cylindrical guide member. In each specific example, the guide member may be made of a material having a friction coefficient giving the guide member so small friction resistance that when the cable comes in sliding contact with the guide member, the durability of the cable does not drop.

### INDUSTRIAL APPLICABILITY

The present invention is available for an automatic opening and closing apparatus for vehicle, which moves an opening and closing element provided to a vehicle to open and close an opening section of the vehicle.

## Claims

1. An automatic opening and closing apparatus for vehicle, which moves an opening and closing element in a longitudinal direction of a vehicle body to open and close an opening section, the automatic opening and closing apparatus comprising:
a guide rail located along the longitudinal direction of the vehicle body, and configured to guide movement of the opening and closing element;
a first cable connected to the opening and closing element, the first cable receiving transmitted power for moving the opening and closing element; and
a first pulley unit located on the vehicle body and wound with the first cable,
wherein the guide rail and the first pulley unit are located at positions different from each other in a width direction of the vehicle body,
wherein part of the guide rail and the first pulley unit are located at the same position in the longitudinal direction of the vehicle body, and
wherein the automatic opening and closing apparatus further comprises: an auxiliary member which keeps a part of the first cable which is routed between a part connected to the opening and closing element and the first pulley unit in a predetermined state of movement.

2. The automatic opening and closing apparatus for vehicle according to claim 1, wherein
a rear end of the guide rail in a longitudinal direction of the vehicle body is provided with a cutout section which is formed by cutting out the guide rail along the longitudinal direction of the vehicle body, and through which a part of the first cable, which is routed between the opening and closing element and the first pulley unit, passes.

3. The automatic opening and closing apparatus for vehicle according to claim 1, wherein
the auxiliary member is attached to a rear end of the guide rail in a longitudinal direction of the vehicle body.

4. The automatic opening and closing apparatus for vehicle according to any one of claims 1 to 3, comprising:
a second cable connected to the opening and closing element, the second cable receiving transmitted power for moving the opening and closing element;
a second pulley unit located further frontward than the first pulley unit in a longitudinal direction of the vehicle body and wound with the second cable; and
a drum located on the vehicle body and rotated clockwise and counterclockwise by an electric motor which generates power to be transmitted to the first cable and the second cable,
wherein the first cable is wound around the drum and the second cable is wound around the drum in a direction of winding reverse to a direction of winding of the first cable.
